(19) Europäisches Patentamt
European Patent Office
Office européen des brevets

(11) **EP 3 462 209 B1**

(12) **EUROPEAN PATENT SPECIFICATION**

(45) Date of publication and mention
of the grant of the patent:
**23.09.2020 Bulletin 2020/39**

(51) Int Cl.:
***G01S 7/481*** *(2006.01)*  ***G01S 7/497*** *(2006.01)*

(21) Application number: **16912687.7**

(86) International application number:
**PCT/JP2016/073573**

(22) Date of filing: **10.08.2016**

(87) International publication number:
**WO 2018/029806 (15.02.2018 Gazette 2018/07)**

(54) **OPTICAL AXIS ADJUSTMENT MECHANISM AND LIDAR DEVICE**

MECHANISMUS ZUR ANPASSUNG EINER OPTISCHEN ACHSE UND LIDAR-VORRICHTUNG

MÉCANISME DE RÉGLAGE D'AXE OPTIQUE ET DISPOSITIF LIDAR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.04.2019 Bulletin 2019/14**

(73) Proprietor: **Mitsubishi Electric Corporation**
**Chiyoda-ku**
**Tokyo 100-8310 (JP)**

(72) Inventors:
• **SAMEJIMA, Narito**
 **Tokyo 100-8310 (JP)**
• **SAKIMURA, Takeshi**
 **Tokyo 100-8310 (JP)**
• **YANAGISAWA, Takayuki**
 **Tokyo 100-8310 (JP)**
• **TAKASAKI, Takuya**
 **Kamakura-shi**
 **Kanagawa 247-0066 (JP)**

(74) Representative: **Pfenning, Meinig & Partner mbB**
**Patent- und Rechtsanwälte**
**Theresienhöhe 11a**
**80339 München (DE)**

(56) References cited:
**WO-A1-2016/117159**  **FR-A1- 2 568 688**
**JP-A- H1 073 661**  **JP-A- H05 100 181**
**JP-A- 2000 278 614**  **JP-A- 2007 035 960**
**JP-A- 2010 014 837**

**Description**

**TECHNICAL FIELD**

The present invention relates to an optical axis adjustment mechanism for lidar apparatus to adjust the angle and position of the optical axis of laser light.

**BACKGROUND ART**

Lidar apparatuses that use laser light (also referred to as a laser radar apparatus or a light wave radar apparatus) transmit laser light into the atmosphere, receive light that is scattered by aerosols in the atmosphere, and measure a wind velocity, or transmit laser light toward a target to be measured, receive light that is reflected by the target, and measure the distance to the target and the velocity of the target. Here, in order to efficiently receive reception light (scattered light or reflected light) for the laser light transmitted, it is desirable to align the angle and position (a position in a plane perpendicular to the optical axis) of an optical axis of the laser light to those of an optical axis of the reception light (coaxial receiving system). Particularly in a coherent Doppler lidar apparatus, it is necessary to align the angle and position of the optical axis of the laser light to those of the optical axis of the reception light with a high degree of accuracy.

Conventionally, as a method of implementing the coaxial receiving system, a method of simultaneously adjusting the angle and position of an optical axis of laser light by means of a commercial or dedicated angle adjustment mechanism having two mirrors is used.

Furthermore, in an application in which anti-vibration is required in adjusting optical axes, for example in a lidar apparatus mounted in an airplane, two wedge plates, instead of the above-mentioned two mirrors, are used as the angle adjustment mechanism. By rotating the wedge plates about a reference optical axis for the laser light, the position and angle of the optical axis of the laser light are adjusted.

In the coaxial receiving system, because the optical axis of the laser light and the optical axis of the reception light are aligned with each other, stable measurement on a range from a short distance to a long distance can be performed. Here, the influence of a position deviation at a distant place is small when there is no deviation in the angle because the laser light propagates in parallel with the optical axis of the reception light. In contrast, when there is a deviation in the angle, the influence of a position deviation at a distant place is large. Therefore, after the optical axis adjustment, stability to angle deviation is particularly required.

In a conventional optical axis adjustment, because adjustment of a mirror or a wedge plate affects the angle and position of an optical axis of laser light, correction of angle deviation causes a deviation in position. Thus, a problem with a conventional optical axis adjustment is that the angle of the optical axis and the position of the optical axis cannot be adjusted independently of each other.

Furthermore, in an angle adjustment mechanism using mirrors, if the angle of a mirror deviates greatly at a time of an optical axis adjustment, causing the laser light to deviate greatly from the optical axis of the reception light, it is necessary to perform an optical axis adjustment again in order to return the optical axis of the laser light to its original position. However, it is difficult to return the optical axis of the laser light to the original position in the conventional angle adjustment mechanism using mirrors. Thus, in a case in which it is necessary to perform an adjustment of an optical axis in an environment in which restrictions are imposed on measuring instrument, such as in a lidar apparatus used outdoors, there is a possibility that characteristics further get worse due to an optical axis adjustment.

Furthermore, because the angle adjustment mechanism using mirrors has a mechanism for adjusting the angles of the mirrors themselves, an angle deviation can be easily caused when the position of the mirror is fixed after the optical axis adjustment. Furthermore, in this angle adjustment mechanism, because the two mirrors are located apart from each other and are adjusted independently of each other, an angle deviation and a position deviation of the optical axis in the laser light will occur when an angle deviation occurs in either of the mirrors.

A mechanism for adjusting the position of an optical axis of laser light by using a parallel plate is known (for example, refer to Patent Literature 1). In the mechanism disclosed in this Patent Literature 1, one or two parallel plates are configured so as to be able to be rotated about an axis perpendicular to a reference optical axis for the laser light. It is conceivable to use this mechanism in an optical axis adjustment mechanism in order to adjust only the position of the optical axis independently of an angle adjustment mechanism.

Patent Literature 2 provides a solution which makes it possible to preserve the image formation of the illuminated point on the photodetector surface. For this purpose the system is provided with an optical deflector device controlled by a circuit as a function of the angular speed of scanning of the beam and of the distance of separation from the illuminated target so as to produce a relative offset between the aiming directions of emission and reception, which compensates for the scanning rotation.

## CITATION LIST

### PATENT LITERATURE

Patent Literature 1: JP 2007-035960 A
Patent Literature 2: FR 2 568 688 A1

## SUMMARY OF INVENTION

### TECHNICAL PROBLEM

However, in the mechanism disclosed in Patent Literature 1, the one or two parallel plates are rotated about an axis perpendicular to the reference optical axis for the laser light, and the stability and the reproducibility of the optical axis adjustment are low even though this mechanism is used in the optical axis adjustment mechanism.

The present invention has been made in order to solve the above-mentioned problem, and an object of the invention is to provide an optical axis adjustment mechanism for lidar apparatus that provides stability and reproducibility in an optical axis adjustment, and that can adjust the position of an optical axis of laser light without changing the angle of the optical axis.

### SOLUTION TO PROBLEM

According to the present invention, there is provided an optical axis adjustment mechanism for lidar apparatus, the mechanism including: an angle adjustment mechanism arranged on a reference optical axis for laser light to adjust an angle of an optical axis of the laser light incident thereon; a position adjustment mechanism arranged on the reference optical axis to adjust a position of the optical axis of the laser light incident thereon; and an optical axis alignment unit arranged on the reference optical axis after the angle adjustment mechanism and the position adjustment mechanism and configured to perform an alignment of the reference optical axis and a reference optical axis of the reception light, wherein the position adjustment mechanism includes: a first parallel plate arranged on the reference optical axis with a normal to an incidence surface thereof being inclined with respect to the reference optical axis; a first rotating mechanism for rotating the first parallel plate about the reference optical axis; a second parallel plate arranged on the reference optical axis with a normal to an incidence surface thereof being inclined with respect to the reference optical axis; and a second rotating mechanism for rotating the second parallel plate about the reference optical axis, the optical axis adjustment mechanism further comprising: an optical system placed after the optical axis alignment unit and configured to receive the laser light that has experienced the angle adjustment of the optical axis by the angle adjustment mechanism and the position adjustment of the optical axis by the position adjustment, and transfer the received laser light; a position detecting unit arranged at a position where the laser light is transferred by the optical system to detect a position of the optical axis of the laser light; and a position adjusting unit for adjusting an amount of rotation by the first rotating mechanism and an amount of rotation by the second rotating mechanism on a basis of the position detected by the position detecting unit, wherein the position detecting unit is arranged at a position where the laser light is transferred by the optical system, wherein a distance s2 between the position detecting unit and the optical system satisfies $1/(s2) = \{1/f\} - \{1/(s1)\}$, where a focal length of the optical system is denoted by f and a distance between the optical axis alignment unit and the optical system is denoted by s1.

### ADVANTAGEOUS EFFECTS OF INVENTION

Because an optical axis adjustment mechanism according to the present invention is structured as above, the optical axis adjustment mechanism can reproduce a position deviation caused in the optical axis of the optical axis alignment unit to the position detecting unit, and therefore can provide stability and reproducibility in an optical axis adjustment and can adjust the position of the optical axis of laser light without changing the angle of the optical axis.

### BRIEF DESCRIPTION OF DRAWINGS

Fig. 1 is a view showing an example of the structure of an optical axis adjustment mechanism according to Embodiment 1 of the present invention;

Fig. 2 is a flow chart showing an example of an optical axis adjustment by the optical axis adjustment mechanism according to Embodiment 1 of the present invention;

Fig. 3A is a view explaining a parallel shift of laser light by a first parallel plate in Embodiment 1 of the present invention, and Fig. 3B is a view showing a movable range of laser light of the first parallel plate;

Figs. 4A to 4C are views showing the movable range of laser light of the first parallel plate, and a movable range of laser light of a second parallel plate in Embodiment 1 of the present invention, Fig. 4A is a view showing a case of $\Delta d1 = \Delta d2$, Fig. 4B is a view showing a case of $\Delta d1 > \Delta d2$, and Fig. 4C is a view showing a case of $\Delta d1 < \Delta d2$;

Figs. 5A and 5B are views explaining a position adjustment (in the case of $\Delta d1 = \Delta d2$) of laser light by the first parallel plate and the second parallel plate in Embodiment 1 of the present invention, Fig. 5A is a view showing a case in which the amount of parallel shift of laser light is zero, and Fig. 5B is a view showing a case in which the amount of parallel shift of laser light is maximum;

Figs. 6A and 6B are views explaining an effect of the optical axis adjustment mechanism according to Embodiment 1 of the present invention, Fig. 6A is a view showing a conventional parallel plate, and Fig. 6B is a view showing the first parallel plate in Embodiment 1;

Fig. 7 is a view showing an example of the structure of an optical axis adjustment mechanism according to Embodiment 2 of the present invention;

Fig. 8 is a view showing an example of the structure of an optical system in Embodiment 2 of the present invention; and

Figs. 9A and 9B are views showing an example of the hardware configuration of a position adjusting unit in Embodiment 2 of the present invention.

## DESCRIPTION OF EMBODIMENTS

Hereinafter, embodiments of the present invention will be explained in detail with reference to the drawings. Embodiment 1.

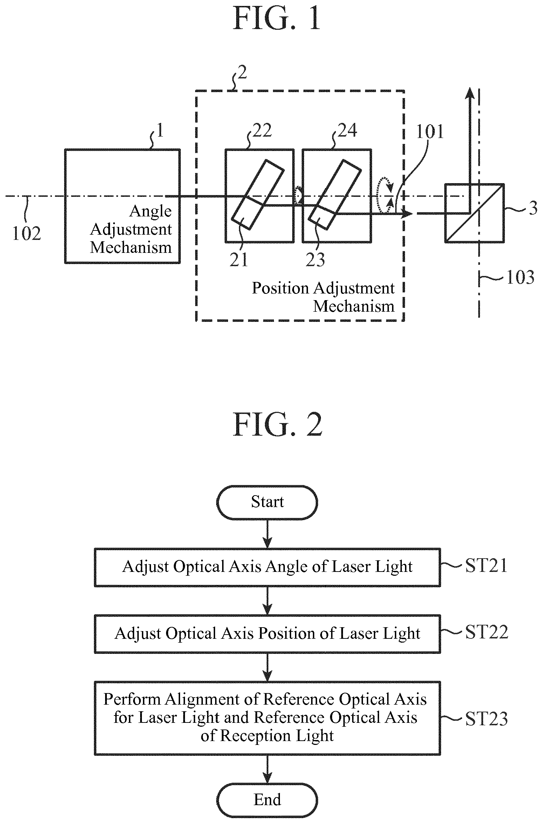

Fig. 1 is a view showing an example of the structure of an optical axis adjustment mechanism according to Embodiment 1 of the present invention.

The optical axis adjustment mechanism adjusts the angle and position of the optical axis of laser light 101 incident thereon, and is mounted in a lidar apparatus (not illustrated) using laser. This optical axis adjustment mechanism includes an angle adjustment mechanism 1, a position adjustment mechanism 2, and an optical axis alignment unit 3, as shown in Fig. 1. An arrow of a dotted line in Fig. 1 shows a movable range of the laser light 101.

The angle adjustment mechanism 1 is arranged on a reference optical axis 102 for the laser light 101, and adjusts the angle of the optical axis of the laser light 101 incident thereon. An existing mechanism can be used as this angle adjustment mechanism 1. For example, the angle adjustment mechanism may be implemented using a combination of two wedge plates which can be rotated about the reference optical axis 102 by a rotating mechanism. In this angle adjustment mechanism 1, not only the angle of the optical axis but also the position of the optical axis is changed.

The position adjustment mechanism 2 is arranged on the reference optical axis 102, and adjusts the position of the optical axis of the laser light 101 incident thereon. The details of this position adjustment mechanism 2 will be explained later.

The optical axis alignment unit 3 is arranged on the reference optical axis 102 after the angle adjustment mechanism 1 and the position adjustment mechanism 2, and performs an alignment of the reference optical axis 102 and a reference optical axis 103 of the reception light. This optical axis alignment unit 3 can be implemented by using, for example, a polarization beam splitter for allowing P-polarized light to pass therethrough and reflecting S-polarized light. P-polarized light has an electric field in a plane including both the normal to a reflecting surface of the polarization beam splitter and the reference optical axis 102, and S-polarized light has an electric field in a plane perpendicular to the plane including both the normal to the above-mentioned reflecting surface and the reference optical axis 102. In the example of Fig. 1, the optical axis alignment unit 3 reflects the laser light 101 to change its direction, and allows reception light to pass therethrough.

Next, the details of the position adjustment mechanism 2 will be explained.

The position adjustment mechanism 2 includes a first parallel plate 21, a first rotating mechanism 22, a second parallel plate 23, and a second rotating mechanism 24, as shown in Fig. 1.

The first parallel plate 21 is a member which is arranged on the reference optical axis 102 in such a manner that the normal to the incidence surface thereof is inclined with respect to the reference optical axis 102, and is a medium having an index of refraction. This first parallel plate 21 is configured so as to be able to be rotated about the reference optical axis 102 by the first rotating mechanism 22.

The first rotating mechanism 22 rotates the first parallel plate 21 about the reference optical axis 102.

The second parallel plate 23 is a member which is arranged on the reference optical axis 102 in such a manner that the normal to the incidence surface thereof is inclined with respect to the reference optical axis 102, and is a medium having an index of refraction. This second parallel plate 23 is configured so as to be able to be rotated about the reference optical axis 102 by the second rotating mechanism 24.

The second rotating mechanism 24 rotates the second parallel plate 23 about the reference optical axis 102.

Next, an example of an optical axis adjustment by using the optical axis adjustment mechanism according to Embodiment 1 will be explained with reference to Figs. 1 to 5.

In the example of the optical axis adjustment by using the optical axis adjustment mechanism, first, the angle adjustment mechanism 1 adjusts the angle of the optical axis of the laser light 101 incident thereon (step ST21), as shown in Fig. 2. In this angle adjustment mechanism 1, the angle of the optical axis of the laser light 101 is adjusted by rotating, for example, each of two wedge plates about the reference optical axis 102 by a predetermined amount of rotation. In this angle adjustment mechanism 1, not only the angle of the optical axis but also the position of the optical axis is changed.

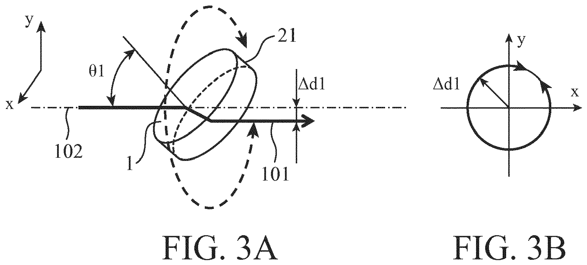

Then, the position adjustment mechanism 2 adjusts the position of the optical axis of the laser light 101 incident thereon (step ST22). Hereafter, operations in the position adjustment mechanism 2 will be explained. It is assumed that the first parallel plate 21 is arranged in such a manner that the normal to the incidence surface thereof is inclined at an angle $\theta 1$ with respect to the reference optical axis 102, as shown in Fig. 3A, and the second parallel plate 23 is similarly arranged with the normal to the incidence surface thereof being inclined at an angle $\theta 2$ with respect to the reference optical axis 102. Dashed arrows in Fig. 3A show the direction of rotation of the first parallel plate 21.

The laser light 101 which has passed through the angle adjustment mechanism 1 is incident on the incidence surface of the first parallel plate 21 at the angle $\theta 1$, as shown in Fig. 3A. Here, it is assumed that the first parallel plate 21 has an index of refraction n1 and a thickness t1. In this case, the laser light 101 incident on the first parallel plate 21 experiences a parallel shift by an amount of deviation $\Delta d1$ expressed by Equation (1) below in a plane including both the reference optical axis 102 and the normal to the incidence surface of the first parallel plate 21, and is emitted.

$$\Delta d1 = (t1/\cos(\theta 1')) \times \sin(\theta 1 - \theta 1') \qquad (1)$$

$\theta 1'$ in Eq. (1) denotes an internal angle of the first parallel plate 21, and is shown by Equation (2) below.

$$\theta 1' = \sin^{-1}(\sin(\theta 1)/n1) \qquad (2)$$

Furthermore, the first parallel plate 21 is configured so as to be able to be rotated about the reference optical axis 102 by the first rotating mechanism 22. Therefore, the first parallel plate 21 can cause a parallel shift of the laser light 101 to any position on a circle that is centered on the reference optical axis 102 and having a radius equal to the amount of deviation $\Delta d1$, in accordance with its own rotational position, as shown in Fig. 3B.

Similarly, the laser light 101 which has passed through the first parallel plate 21 is incident on the incidence surface of the second parallel plate 23 at the angle $\theta 2$. Here, it is assumed that the second parallel plate 23 has an index of refraction n2 and a thickness t2. In this case, the laser light 101 incident on the second parallel plate 23 experiences a parallel shift by an amount of deviation $\Delta d2$ expressed by Equation (3) below in a plane including both the reference optical axis 102 and the normal to the incidence surface of the second parallel plate 23, and is emitted.

$$\Delta d2 = (t2/\cos(\theta 2')) \times \sin(\theta 2 - \theta 2') \qquad (3)$$

$\theta 2'$ in Eq. (3) denotes an internal angle of the second parallel plate 23, and is shown by Equation (4) below.

$$\theta 2' = \sin^{-1}(\sin(\theta 2)/n2) \qquad (4)$$

Furthermore, the second parallel plate 23 is configured so as to be able to be rotated about the reference optical axis 102 by the second rotating mechanism 24. Therefore, the second parallel plate 23 can cause a parallel shift of the laser light 101 to any position on a circle that is centered on the reference optical axis 102 and having a radius equal to the amount of deviation $\Delta d2$, in accordance with its own rotational position.

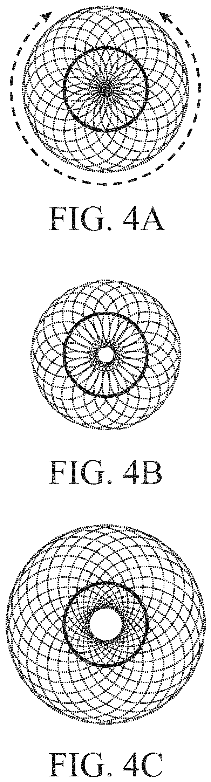

Therefore, when the laser light 101 passes through the first parallel plate 21 and the second parallel plate 23, the laser light 101 experiences a parallel to any position on a circle (solid line) having a radius equal to the amount of deviation $\Delta d1$, and then experiences a parallel shift to any position on a circle (dotted line) having a radius equal to the amount of deviation $\Delta d2$, as shown in Fig. 4. Therefore, the position adjustment mechanism 2 can cause a parallel shift of the laser light 101 to any position ranging from a position having a maximum radius of $|\Delta d1 + \Delta d2|$ to a position having a minimum radius of |Δd1 - Δd2|. Fig. 4A shows a case of Δd1 = Δd2, Fig. 4B shows a case of Δd1 > Δd2, and Fig. 4A shows a case of Δd1 < Δd2.

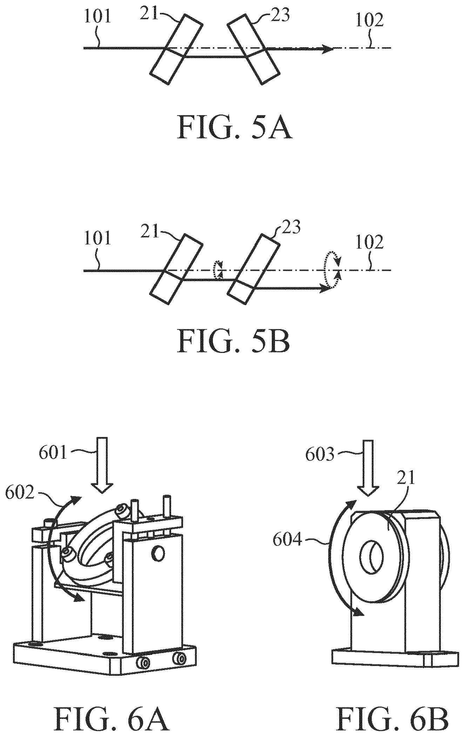

Furthermore, if the arrangement angles and the rotational positions of the first parallel plate 21 and the second parallel plate 23 are adjusted in such a way that the amount of deviation Δd1 is equal to the amount of deviation Δd2, the position adjustment mechanism 2 can emit the laser light 101 with the amount of parallel shift being zero, i.e., without changing the position of the optical axis of the laser light 101, as shown in Fig. 4A. Fig. 5A is a view showing the rotational positions of the first parallel plate 21 and the second parallel plate 23 in a case in which Δd1 = Δd2, and the amount of parallel shift of the laser light 101 is set to zero, and Fig. 5B is a view showing the rotational positions of the first parallel plate 21 and the second parallel plate 23 in a case in which Δd1 = Δd2, and the amount of parallel shift of the laser light 101 is set to a maximum.

The optical axis alignment unit 3 then performs an alignment of the reference optical axis 102 and the reference optical axis 103 of the reception light (step ST23). In the example of Fig. 1, the optical axis alignment unit 3 reflects the laser light 101 to change its direction, and allows the reception light to pass therethrough.

In this way, in the position adjustment mechanism 2, only the position of the optical axis of the laser light 101 is changed by rotating the first parallel plate 21 and the second parallel plate 23 about the reference optical axis 102. Therefore, it is possible to perform a position adjustment on the optical axis of the laser light 101 independently of the angle adjustment, and the optical axis adjustment mechanism that provides a stable characteristic when performing an optical axis adjustment can be implemented. Furthermore, by fixing the rotational positions of the first parallel plate 21 and the second parallel plate 23 after the position adjustment, the position of the optical axis of the laser light 101 can be easily fixed.

Furthermore, in the position adjustment mechanism 2, even in a case in which the amount of parallel shift of the optical axis is too large in the position adjustment, the optical axis can be returned to the position before the position adjustment by rotating the first parallel plate 21 and the second parallel plate 23. Therefore, in the position adjustment, the optical axis does not deviate completely, and the optical axis can be adjusted surely. Particularly in a lidar apparatus or the like used outdoors, in many cases it is necessary to perform an optical axis adjustment in an environment in which restrictions are imposed on measuring instrument, but the optical axis can be returned to the position before the position adjustment even if the position adjustment fails.

Furthermore, in the position adjustment mechanism 2, the two parallel plates 21 and 23 are used. Therefore, when an inclination occurs in the position adjustment mechanism 2 itself due to, for example, a distortion of the housing, or the like, a parallel shift of the optical axis dependent on the inclination occurs in the laser light 101, but the angle of the optical axis does not change and the performance of the optical axis adjustment mechanism is stable. Particularly in a lidar apparatus or the like used outdoors, although the housing may be distorted due to stress or temperature, the angle of the optical axis does not change even in this case.

Although the case in which the position adjustment mechanism 2 is arranged after the angle adjustment mechanism 1 is shown above, the position adjustment mechanism 2 may be arranged before the angle adjustment mechanism 1. Also in this case, a position adjustment by the position adjustment mechanism 2 is performed after an angle adjustment by the angle adjustment mechanism 1 is performed, as shown in the flow chart shown in Fig. 2.

As explained above, according to Embodiment 1, because the angle adjustment mechanism 1 arranged on the reference optical axis 102 for the laser light 101, for adjusting the angle of the optical axis of the laser light 101 incident thereon, and the position adjustment mechanism 2 arranged on the reference optical axis 102, for adjusting the position of the optical axis of the laser light 101 incident thereon are included, and the position adjustment mechanism 2 has the first parallel plate 21 arranged on the reference optical axis 102 with the normal to the incidence surface thereof being inclined against the reference optical axis 102, the first rotating mechanism 22 for rotating the first parallel plate 21 about the reference optical axis 102, the second parallel plate 23 arranged on the reference optical axis 102 with the normal to the incidence surface thereof being inclined against the reference optical axis 102, and the second rotating mechanism 24 for rotating the second parallel plate 23 about the reference optical axis 102, stability and reproducibility of the optical axis adjustment are provided, and the position of the optical axis in the laser light 101 can be adjusted without changing the angle of the optical axis.

In the position adjustment mechanism 2, the position of the optical axis of the laser light 101 is adjusted by rotating the first parallel plate 21 and the second parallel plate 23 about the reference optical axis 102. Therefore, an optical axis adjustment mechanism having a higher degree of reproducibility and a higher degree of stability than those of a conventional structure of rotating a parallel plate around an axis perpendicular to a reference optical axis for laser light can be provided.

More specifically, in the case of rotating a parallel plate about an axis perpendicular to a reference optical axis for laser light, like in the case of the conventional structure shown in Fig. 6A, it is necessary to fix either the axis of rotation around which the parallel plate is rotated or the parallel plate itself in order to fix the rotational position of the parallel plate. However, because in this case it is necessary to perform the fixation in such a way that the laser light is not blocked, the structure is made complicated. Furthermore, in the case in which the parallel plate itself is to be fixed, because a direction (reference numeral 601 of Fig. 6A) in which force is exerted on the parallel plate is the direction of rotation (reference numeral 602 of Fig. 6A) of the parallel plate, the rotational position of the parallel plate is displaced when the rotational position is fixed after the optical axis adjustment. In addition, because the point where the parallel plate is fixed by using a fixing part for fixing the rotational position of the parallel plate is far away from the axis of rotation, there is a possibility that large force is exerted on the axis of rotation in accordance with the principle of leverage, thereby causing the axis of rotation to distort. There is also an influence of turbulence from the outside, and, in a case of supporting the parallel plate only at the axis of rotation, the rotational position is easily displaced because the stress exerted on the axis of rotation becomes strong when a strong impact is applied to the fixing part.

On the other hand, as shown in Fig. 6B according to Embodiment 1, in the case of rotating the first parallel plate 21 around the reference optical axis 102, a direction (reference numeral 603 of Fig. 6B) in which force is exerted on the first parallel plate 21 in order to fix the rotational position of the first parallel plate 21 is perpendicular to the direction of rotation (reference numeral 604 of Fig. 6B) of the first parallel plate 21. Therefore, because displacement of the rotational position due to the fixation hardly occurs and the rotational position can be fixed strongly, and there is only a parallel shift even when the first parallel plate 21 is displaced in a direction of the fixation, no influence is exerted on the optical axis adjustment. In addition, because the amount of deviation of the optical axis with respect to the rotation is small, and the optical axis deviation is small even if rotation occurs in the first parallel plate 21 due to the above-mentioned fixation, the reproducibility is high. The same goes for the second parallel plate 23.

Although the position adjustment mechanism 2 is arranged on the reference optical axis 102 in Embodiment 1, the position adjustment mechanism 2 may be arranged on the reference optical axis 103 of the reception light so as to adjust the position of the reference optical axis 103. Also in the latter case, an alignment of the reference optical axis 102 and the reference optical axis 103 can be performed, and the same advantage as that mentioned above is provided.

Embodiment 2.

In the optical axis adjustment mechanism according to Embodiment 1, the structure of adjusting the position of the optical axis of the laser light 101 without changing the angle of the optical axis is shown. In this optical axis adjustment mechanism, the optical axis is not displaced completely through the position adjustment, and can be returned to the position before the position adjustment only by rotating the first parallel plate 21 and the second parallel plate 23. Therefore, by adding an element or mechanism for detecting the position of the optical axis of the laser light 101 to this optical axis adjustment mechanism, the position adjustment can be automatized. Therefore, in Embodiment 2, an optical axis adjustment mechanism for performing a position adjustment automatically will be explained.

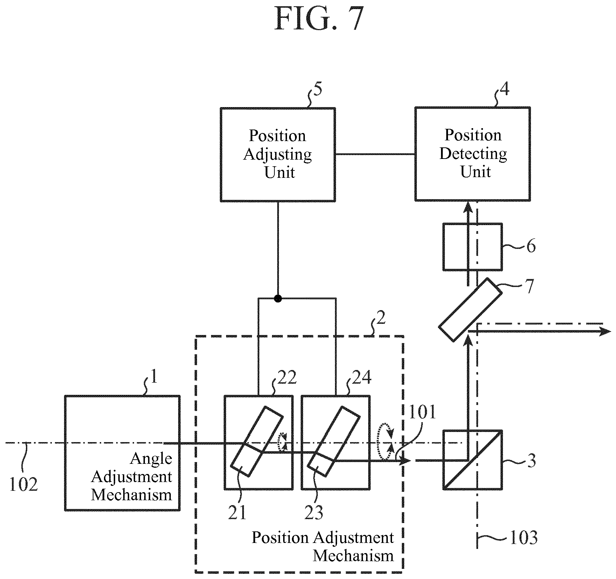

Fig. 7 is a view showing an example of a configuration of the optical axis adjustment mechanism according to Embodiment 2 of the present invention. The optical axis adjustment mechanism according to the Embodiment 2 shown in this Fig. 7 is the one in which a position detecting unit 4, a position adjusting unit 5, and an optical system 6 are added to the optical axis adjustment mechanism according to Embodiment 1 shown in Fig. 1. The other components are the same as or similar to those according to Embodiment 1, and are denoted by the same reference numerals and an explanation of the components will be omitted hereafter. In Fig. 7, a reference numeral 7 denotes a partial reflection mirror for reflecting a main part of light and for allowing a part of the light to pass therethrough. This partial reflection mirror 7 can be any mirror for allowing a part of light to pass therethrough. For example, because a bit of transmission light occurs even in a total reflection mirror which is generally assumed to reflect all of light, a total reflection mirror can be used as the partial reflection mirror 7.

The position detecting unit 4 detects the position of an optical axis of laser light 101 that has experienced an angle adjustment of optical axis by an angle adjustment mechanism 1 and a position adjustment of optical axis by a position adjustment mechanism 2.

The position adjusting unit 5 adjusts an amount of rotation by a first rotating mechanism 22 and an amount of rotation by a second rotating mechanism 24 on the basis of the position detected by the position detecting unit 4. As a result, the position adjusting unit 5 performs an adjustment so that the position of the optical axis of the laser light 101 is located in a desired position.

For example, the position adjusting unit 5 stores the position of a reference optical axis 103 of reception light in advance. The position adjusting unit 5 then detects the difference between the position of the optical axis of the laser light 101 detected by the position detecting unit 4 and the stored position of the reference optical axis 103 of the reception light, and adjusts the amount of rotation to be adjusted by the first rotating mechanism 22 and the amount of rotation to be adjusted by the second rotating mechanism 24 so that the difference is eliminated.

In the example of Fig. 7, the partial reflection mirror 7 is placed after an optical axis alignment unit 3, and the directions of the laser light 101 and the reception light are changed by this partial reflection mirror 7. The position detecting unit 4 then detects the position of the optical axis by using the laser light 101 that leaks from the rear surface of this partial reflection mirror 7. As a result, the optical axis adjustment mechanism having the position detecting unit 4 can be mounted in a lidar apparatus, and the optical axis adjustment mechanism can automatically perform an optical axis adjustment during observation by the lidar apparatus.

The optical system 6 receives the laser light 101 that has experienced the angle adjustment of the optical axis by the angle adjustment mechanism 1 and the position adjustment of the optical axis by the position adjustment mechanism 2, and transfers the received laser light. In the example of Fig. 7, the optical system 6 is placed after the partial reflection mirror 7. This optical system 6 is not an indispensable component, and is disposed as needed. In the case in which the optical system 6 is placed, the position detecting unit 4 is arranged at a position where the laser light 101 is transferred by the optical system 6. This optical system 6 enables the position detecting unit 4 to detect the position of the optical axis of the laser light 101 at any point. This any point refers to a point at which the optical axis of the laser light 101 is desired to be aligned with that of the reception light, and is, for example, located on an emergence surface of the optical axis alignment unit 3.

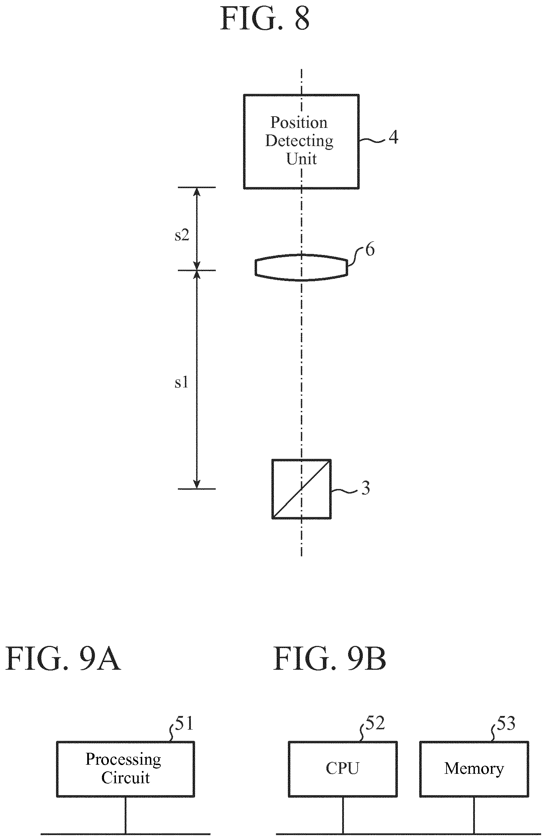

As the optical system 6, either a lens having a focal length f as shown in Fig. 8, or a transfer optical system which is implemented by a combination of multiple optical components and which is equivalent to the lens can be used. Here, in the case in which the position of the optical axis of the laser light 101 at the emergence surface of the optical axis alignment unit 3 is to be detected by the position detecting unit 4, the relationship between the distance s1 from the optical axis alignment unit 3 to the optical system 6 and the distance s2 from the optical system 6 to the position detecting unit 4 is expressed by Equation (5) below.

$$1/f \ = \ 1/s1 \ + \ 1/s2 \hspace{4cm} (5)$$

Here, in a case in which the optical system 6 is not placed, the position of the optical axis detected by the position detecting unit 4 is displaced with respect to the position of the optical axis on the emergence surface of the optical axis alignment unit 3 if the laser light 101 has an angle with respect to the reference optical axis 103 of the reception light. Therefore, it is necessary to repeatedly perform angle adjustments and position adjustments.

In contrast, in the case in which the optical system 6 is placed, a positional relationship between the optical axis in the laser light 101 on the emergence surface of the optical axis alignment unit 3 and the reference optical axis 103 of the reception light can be transferred to the position detecting unit 4, and can be reproduced. As a result, because the position deviation of the optical axis in the optical axis alignment unit 3 can be reproduced in the position detecting unit 4 even when the laser light 101 has an angle with respect to the reference optical axis 103 of the reception light, only the position can be adjusted independently. Therefore, the optical axis adjustment can be performed in a short time.

In the position adjustment mechanism 2, only the position of the optical axis of the laser light 101 is changed by rotating the first parallel plate 21 and the second parallel plate 23 about the reference optical axis 102. Therefore, even if in the position adjustment mechanism 2 the amount of parallel shift of the optical axis becomes too large in the position adjustment, the optical axis can be returned to a previous position at which it is located before the position adjustment by rotating the first parallel plate 21 and the second parallel plate 23. Therefore, in the position adjustment, the optical axis is not displaced completely, and the optical axis can be adjusted surely. In addition, the position adjusting unit 5 stores the initial rotational positions of the first parallel plate 21 and the second parallel plate 23 in advance, thereby being able to easily return the optical axis to its initial position even when failing in the position adjustment.

Finally, an example of the hardware configuration of the position adjusting unit 5 in Embodiment 2 will be explained with reference to Fig. 9.

The function of the position adjusting unit 5 is implemented by a processing circuit 51. The processing circuit 51 can be hardware for exclusive use, as shown in Fig. 9A, or a Central Processing Unit (CPU, which is also referred to as a processing device, an arithmetic device, a microprocessor, a microcomputer, a processor, or a Digital Signal Processor (DSP)) 52 that executes a program stored in a memory 53, as shown in Fig. 9B.

In a case in which the processing circuit 51 is hardware for exclusive use, the processing circuit 51 is, for example, a single circuit, a composite circuit, a programmable processor, a parallel programmable processor, an Application Specific Integrated Circuit (ASIC), an Field Programmable Gate Array (FPGA), or a combination of these circuits.

In a case in which the processing circuit 51 is a CPU, the function of the position adjusting unit 5 is implemented by software, firmware, or a combination of software and firmware. Software and firmware are described as programs and the programs are stored in the memory 53. The processing circuit 51 implements the function of the position adjusting unit 5 by reading and executing programs stored in the memory 53. More specifically, the position adjusting unit 5 includes the memory 53 for storing the programs by which the operation of adjusting the amount of rotation by the first rotating mechanism 22 and the amount of rotation by the second rotating mechanism 24 is to be performed as a result on the basis of the position detected by the position detecting unit 4 when the programs are executed by the processing circuit 51. Furthermore, it can also be said that these programs cause a computer to perform a procedure or a method which the position adjusting unit 5 uses. Here, the memory 53 is, for example, a non-volatile or volatile semiconductor memory, such as a Random Access Memory (RAM), a Read Only Memory (ROM), a flash memory, an Erasable Programmable ROM (EPROM), or an Electrically EPROM (EEPROM), a magnetic disk, a flexible disk, an optical disk, a compact disc, a mini disc, a Digital Versatile Disc (DVD), or the like.

In this way, the processing circuit 51 can implement the above-mentioned function by using hardware, software, firmware, or a combination of hardware, software, and firmware.

## INDUSTRIAL APPLICABILITY

The optical axis adjustment mechanisms according to the present invention are suitable for use as an optical axis adjustment mechanism or the like that provides stability and reproducibility in an optical axis adjustment, that can adjust the position of the optical axis of laser light without changing the angle of the optical axis, and that adjusts the angle and the position of the optical axis of the laser light.

## REFERENCE SIGNS LIST

1 angle adjustment mechanism, 2 position adjustment mechanism, 3 optical axis alignment unit, 4 position detecting unit, 5 position adjusting unit, 6 optical system, 7 partial reflection mirror, 21 first parallel plate, 22 first rotating mechanism, 23 second parallel plate, 24 second rotating mechanism, 51 processing circuit, 52 CPU, 53 memory, 101 laser light, 102 reference optical axis, and 103 reference optical axis.

## Claims

1. An optical axis adjustment mechanism for lidar apparatus, the mechanism comprising:

an angle adjustment mechanism (1) arranged on a reference optical axis (102) for laser light (101) to adjust an angle of an optical axis of the laser light (101) incident thereon;
a position adjustment mechanism (2) arranged on the reference optical axis (102) to adjust a position of the optical axis (102) of the laser light (101) incident thereon; and
an optical axis alignment unit (3) arranged on the reference optical axis (102) after the angle adjustment mechanism (1) and the position adjustment mechanism (2) and configured to perform an alignment of the reference optical axis (102) and a reference optical axis (103) of the reception light,
wherein the position adjustment mechanism (2) includes:

a first parallel plate (21) arranged on the reference optical axis (102) with a normal to an incidence surface thereof being inclined with respect to the reference optical axis (102);
a first rotating mechanism (22) for rotating the first parallel plate (21) about the reference optical axis (102);
a second parallel plate (23) arranged on the reference optical axis (102) with a normal to an incidence surface thereof being inclined with respect to the reference optical axis (102); and
a second rotating mechanism (24) for rotating the second parallel plate (23) about the reference optical axis (102),

the optical axis adjustment mechanism further comprising:

an optical system (6) placed after the optical axis alignment unit (3) and configured to receive the laser light (101) that has experienced the angle adjustment of the optical axis by the angle adjustment mechanism (1) and the position adjustment of the optical axis by the position adjustment mechanism (2), and transfer the received laser light; and
a position detecting unit (4) arranged at a position where the laser light (101) is transferred by the optical system (6) and configured to detect a position of the optical axis of the laser light (101); and
a position adjusting unit (5) for adjusting an amount of rotation by the first rotating mechanism (22) and an amount of rotation by the second rotating mechanism (24) on a basis of the position detected by the position detecting unit(4),
wherein a distance s2 between the position detecting unit (4) and the optical system (6) satisfies $1/(s2) = \{1/f\} - \{1/(s1)\}$, where a focal length of the optical system (6) is denoted by f and a distance between the optical axis alignment unit (3) and the optical system (6) is denoted by s1.

**Patentansprüche**

1. Optische-Achse-Anpassungsmechanismus für ein Lidargerät, wobei der Mechanismus umfasst:

einen Winkelanpassungsmechanismus (1), der auf einer optischen Referenzachse (102) für Laserlicht (101) angeordnet ist, um einen Winkel einer optischen Achse des darauf einfallenden Laserlichts (101) anzupassen; einen Positionsanpassungsmechanismus (2), der auf der optischen Referenzachse (102) angeordnet ist, um eine Position der optischen Achse (102) des darauf einfallenden Laserlichts (101) anzupassen; und eine Optische-Achse-Ausrichtungseinheit (3), die auf der optischen Referenzachse (102) hinter dem Winkelanpassungsmechanismus (1) und dem Positionsanpassungsmechanismus (2) angeordnet ist und eingerichtet ist, eine Ausrichtung der optischen Referenzachse (102) und einer optischen Referenzachse (103) des Empfangslichts durchzuführen, wobei der Positionsanpassungsmechanismus (2) umfasst:

eine erste parallele Platte (21), die auf der optischen Referenzachse (102) angeordnet ist, wobei eine Normale zu einer Einfallsoberfläche derselben in Bezug auf die optische Referenzachse (102) geneigt ist; einen ersten Drehmechanismus (22) zum Drehen der ersten parallelen Platte (21) um die optische Referenzachse (102); eine zweite parallele Platte (23), die auf der optischen Referenzachse (102) angeordnet ist, wobei eine Normale zu einer Einfallsfläche derselben in Bezug auf die optische Referenzachse (102) geneigt ist; und einen zweiten Drehmechanismus (24) zum Drehen der zweiten parallelen Platte (23) um die optische Referenzachse (102), wobei der Optische-Achse-Anpassungsmechanismus ferner umfasst:

ein optisches System (6), das hinter der Optische-Achse-Ausrichtungseinheit (3) angeordnet ist und eingerichtet ist, das Laserlicht (101) zu empfangen, das die Winkelanpassung der optischen Achse durch den Winkelanpassungsmechanismus (1) und die Positionsanpassung der optischen Achse durch den Positionsanpassungsmechanismus (2) erfahren hat, und das empfangene Laserlicht zu übertragen; und eine Positionserfassungseinheit (4), die an einer Position angeordnet ist, an die das Laserlicht (101) durch das optische System (6) übertragen wird, und eingerichtet ist, eine Position der optischen Achse des Laserlichts (101) zu erfassen; und eine Positionsanpassungseinheit (5) zum Anpassen eines Betrags der Drehung durch den ersten Drehmechanismus (22) und eines Betrags der Drehung durch den zweiten Drehmechanismus (24) auf Grundlage der durch die Positionserfassungseinheit (4) erfassten Position, wobei ein Abstand s2 zwischen der Positionserfassungseinheit (4) und dem optischen System (6) 1/(s2) = {1/f} - {1/(s1)} erfüllt, wobei eine Brennweite des optischen Systems (6) mit f bezeichnet ist und ein Abstand zwischen der Optische-Achse-Ausrichtungseinheit (3) und dem optischen System (6) mit s1 bezeichnet ist.

**Revendications**

1. Mécanisme d'ajustement d'axe optique destiné à un appareil LIDAR, le mécanisme comprenant :

un mécanisme d'ajustement d'angle (1) prévu sur un axe optique de référence (102) pour une lumière laser (101) afin d'ajuster un angle d'un axe optique de la lumière laser (101) qui est incidente dessus ; un mécanisme d'ajustement de position (2) prévu sur l'axe optique de référence (102) afin d'ajuster une position de l'axe optique (102) de la lumière laser (101) qui est incidente dessus ; et une unité d'alignement d'axe optique (3) prévue sur l'axe optique de référence (102) après le mécanisme d'ajustement d'angle (1) et le mécanisme d'ajustement de position (2) et configurée pour effectuer un alignement de l'axe optique de référence (102) et d'un axe optique de référence (103) de la lumière de réception, dans lequel le mécanisme d'ajustement de position (2) comprend :

une première plaque parallèle (21) prévue sur l'axe optique de référence (102) avec un plan normal par rapport à une surface d'incidence de celle-ci incliné par rapport à l'axe optique de référence (102) ; un premier mécanisme de rotation (22) destiné à faire pivoter la première plaque parallèle (21) autour de l'axe optique de référence (102) ;

une seconde plaque parallèle (23) prévue sur l'axe optique de référence (102) avec un plan normal par rapport à une surface d'incidence de celle-ci incliné par rapport à l'axe optique de référence (102) ; et un second mécanisme de rotation (24) destiné à faire pivoter la seconde plaque parallèle (23) autour de l'axe optique de référence (102),

le mécanisme d'ajustement d'axe optique comprenant en outre :

un système optique (6) placé après l'unité d'alignement d'axe optique (3) et configuré pour recevoir la lumière laser (101) qui a subi l'ajustement d'angle de l'axe optique par le mécanisme d'ajustement d'angle (1) et l'ajustement de position de l'axe optique par le mécanisme d'ajustement de position (2), et pour transférer la lumière laser reçue ; et

une unité de détection de position (4) prévue à un emplacement auquel la lumière laser (101) est transférée par le système optique (6) et configurée pour détecter une position de l'axe optique de la lumière laser (101) ; et

une unité d'ajustement de position (5) destinée à ajuster une quantité de rotation par le premier mécanisme de rotation (22) et une quantité de rotation par le second mécanisme de rotation (24) sur la base de la position détectée par l'unité de détection de position (4),

dans lequel une distance s2 entre l'unité de détection de position (4) et le système optique (6) satisfait $1/(s2) = (1/f) - \{1/s1)\}$, où une longueur focale du système optique (6) est indiquée par f et une distance entre l'unité d'alignement d'axe optique (3) et le système optique (6) est indiquée par s1.

# FIG. 1

# FIG. 2

FIG. 3A

FIG. 3B

FIG. 4A

FIG. 4B

FIG. 4C

FIG. 5A

FIG. 5B

FIG. 6A

FIG. 6B

# FIG. 7

# FIG. 8

Position Detecting Unit ~4

s2

6

s1

3

# FIG. 9A

Processing Circuit 51

# FIG. 9B

CPU 52

Memory 53

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007035960 A
- FR 2568688 A1